# EUROPEAN PATENT APPLICATION

(11) **EP 4 300 306 A1**
(43) Date of publication of application: **03.01.2024**
(21) Application number: 22205861.2
(22) Date of filing: 07.11.2022
(51) Int. Cl.: G06F 9/50, H04L 65/75, G06N 5/043

(54) **STREAMING MEDIA PROCESSING METHOD AND APPARATUS BASED ON INFERENCE SERVICE AND ELECTRONIC DEVICE**

(30) Priority: 29.06.2022 CN 202210852749
(71) Applicant: Beijing Baidu Netcom Science and Technology Co., Ltd., Beijing 100085 (CN)
(72) Inventor: LI, Jinqi, Beijing, 100085 (CN); SHI, En, Beijing, 100085 (CN); HU, Mingren, Beijing, 100085 (CN); QIAN, Zhengyu, Beijing, 100085 (CN); YUAN, Zhengxiong, Beijing, 100085 (CN); CHU, Zhenfang, Beijing, 100085 (CN); HUANG, Yue, Beijing, 100085 (CN); LUO, Yang, Beijing, 100085 (CN); WANG, Guobin, Beijing, 100085 (CN)
(74) Representative: Bringer IP

(57) **Abstract**

The present disclosure provides a streaming media processing method and apparatus based on inference service, and an electronic device, which relates to the field of artificial intelligence, and in particular, to the field of inference service of artificial intelligence models. A specific implementation solution includes: detecting (S101), in a process of processing a k-th channel of streaming media through an i-th inference service pod, the i-th inference service pod, to obtain a detection result of the i-th inference service pod, i and k being positive integers; determining (S102) a replacement object of the i-th inference service pod, in the case where it is determined that the i-th inference service pod is in an abnormal state based on the detection result of the i-th inference service pod; and processing (S103) the k-th channel of streaming media through the replacement object of the i-th inference service pod.

## Description

### TECHNICAL FIELD

The present disclosure relates to the field of artificial intelligence, and in particular, to the field of inference service of artificial intelligence models.

### BACKGROUND

At present, the streaming media technology is at a high-speed development stage, and the application of Artificial Intelligence (AI) to real-time review of streaming media has become a key technology for processing streaming media. However, how to ensure the stability and accuracy of streaming media processing has become a problem to be solved.

### SUMMARY

The present disclosure provides a streaming media processing method and apparatus based on inference service, an electronic device and a storage medium.

According to a first aspect of the present disclosure, there is provided a streaming media processing method based on an inference service, including: detecting, in a process of processing a k-th channel of streaming media through an i-th inference service pod, the i-th inference service pod, to obtain a detection result of the i-th inference service pod, i and k being positive integers; determining a replacement object of the i-th inference service pod, in the case where it is determined that the i-th inference service pod is in an abnormal state based on the detection result of the i-th inference service pod; and processing the k-th channel of streaming media through the replacement object of the i-th inference service pod.

According to a second aspect of the present disclosure, there is provided a streaming media processing apparatus based on inference service, including: a state keeping module, an object management module, and a streaming media management module, where the state keeping module is configured to detect, in a process of processing a k-th channel of streaming media through an i-th inference service pod, the i-th inference service pod, to obtain a detection result of the i-th inference service pod, i and k being positive integers; the object management module is configured to determine a replacement object of the i-th inference service pod, in the case where it is determined that the i-th inference service pod is in an abnormal state based on the detection result of the i-th inference service pod; and the streaming media management module is configured to process the k-th channel of streaming media through the replacement object of the i-th inference service pod.

According to a third aspect of the present disclosure, there is provided an electronic device, including: at least one processor; and a memory connected in communication with the at least one processor. The memory stores an instruction executable by the at least one processor, and the instruction, when executed by the at least one processor, enables the at least one processor to execute the method as set forth above.

According to a fourth aspect of the present disclosure, there is provided a non-transitory computer-readable storage medium storing a computer instruction thereon, and the computer instruction is used to cause a computer to execute the method as set forth above.

According to fifth aspect of the present disclosure, provided is a computer program product including a computer program, and the computer program implements the method as set forth above, when executed by a processor.

It should be understood that the content described in this part is not intended to identify critical or essential features of embodiments of the present disclosure, nor is it used to limit the scope of the present disclosure. Other features of the present disclosure will be easily understood through the following description.

According to the scheme provided in the embodiments, in a process of processing streaming media in any inference service pod, the streaming media is processed by using a replacement object of the inference service pod, in the case where it is determined that the inference service pod is in an abnormal state. In this way, the accuracy and stability of processing the streaming media can be guaranteed.

### BRIEF DESCRIPTION OF THE DRAWINGS

The accompanying drawings are used to better understand the present solution, and do not constitute a limitation to the present disclosure.
FIG. 1 is a flow diagram of a streaming media processing method based on an inference service according to the embodiments of the present application.
FIG. 2 is a schematic structural diagram of a streaming media processing apparatus based on an inference service according to the embodiments of the present disclosure.
FIG. 3 is another schematic structural diagram of a streaming media processing apparatus based on an inference service according to the embodiments of the present disclosure.
FIG. 4 is a schematic scenario processing flow chart of a streaming media processing method based on an inference service according to the embodiments of the present disclosure.
FIG. 5 is a block diagram of an electronic device for implementing a streaming media processing method based on an inference service according to the embodiments of the present disclosure.

### DETAILED DESCRIPTION

Hereinafter, descriptions to the exemplary embodiments of the present disclosure are made with reference to the accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

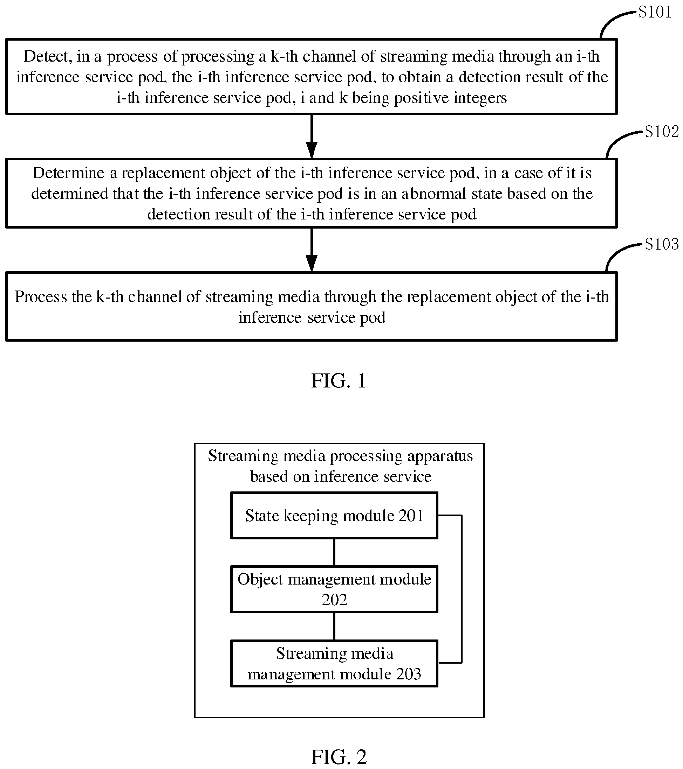

Embodiments of the first aspect of the present disclosure provide a streaming media processing method based on an inference service. As shown in FIG. 1, the method includes the followings.

In S101, in a process of processing a k-th channel of streaming media through an i-th inference service pod, the i-th inference service pod is detected, to obtain a detection result of the i-th inference service pod, i and k being positive integers.

In S102, a replacement object of the i-th inference service pod is determined, in the case where it is determined that the i-th inference service pod is in an abnormal state based on the detection result of the i-th inference service pod.

In S103, the k-th channel of streaming media is processed through the replacement object of the i-th inference service pod.

The information processing method provided in the embodiments may be applied to an electronic device which may specifically be a server.

The k-th channel of streaming media is any one of N channels of streaming media, and the i-th inference service pod may be any one of N inference service pods, where N is a positive integer greater than or equal to i. The quantity N of the inference service pods is the same as the quantity of channels of streaming media, and the N inference service pods are bound to different streaming media in the N channels of streaming media, respectively, that is, the N inference service pods and the N channels of streaming media are in one-to-one correspondence. That is to say, the server may process a corresponding streaming media through each of one or more inference service pods at the same time.

The processing of the k-th channel of streaming media through the i-th inference service pod may specifically refer to: based on the i-th inference service pod, performing AI inference on a current video frame of the k-th channel of streaming media obtained in real time, and feeding back a real-time audit result.

The processing of the k-th channel of streaming media through the replacement object of the i-th inference service pod refer to: based on the replacement object of the i-th inference service pod, performing AI inference on the current video frame of the k-th channel of streaming media obtained in real time, and feeding back the real-time audit result.

It can be seen that by adopting the above scheme, in the process of processing streaming media by any inference service pod, it is possible to process the streaming media by using the replacement object of the inference service pod, in the case where it is determined that the inference service pod is in an abnormal state. In this way, the accuracy and stability of processing the streaming media may be guaranteed.

In an implementation, the method further includes: generating N inference service pods, in the case where it is determined that there are N channels of streaming media to be processed, where the N channels of streaming media include the k-th channel of streaming media, the N inference service pods include the i-th inference service pod, and N is a positive integer greater than or equal to i and greater than or equal to k; and binding the N inference service pods to the N channels of streaming media, respectively, and processing the N channels of streaming media through the N inference service pods, respectively, where different inference service pods of the N inference service pods correspond to different channels of streaming media.

The method for determining that there are N channels of streaming media to be processed may specifically include: determining that there are N channels of streaming media to be processed in the case where the quantity of N of the channels of streaming media to be processed this time is obtained by interfacing with an external network based on a preset protocol. It should be pointed out that while obtaining the quantity of N of the channels of streaming media to be processed this time, address information of each channel of streaming media to be processed this time may also be obtained. The address information corresponding to each channel of streaming media may specifically be the address information of an external network server corresponding to each channel of streaming media. In addition, the address information of the external network server corresponding to different streaming media may be different.

In the case where it is determined that there are N channels of streaming media to be processed, it may be determined that the quantity of inference service pods to be created this time is N, that is, one inference service pod is created for each channel of streaming media.

In an implementation, generating the N inference service pods, includes: generating a j-th inference service pod of the N inference service pods, based on a j-th model inference service and a j-th group of configuration information, j being a positive integer less than or equal to N, where the j-th group of configuration information includes at least one of: keep-alive interface configuration information of the j-th inference service pod, resource restriction configuration information of the j-th inference service pod, scheduling configuration information of the j-th inference service pod, or storage configuration information of the j-th inference service pod.

The j-th inference service pod is any one of the N inference service pods. Since the processing for each of the N inference service pods is the same as the processing for the j-th inference service pod, the description thereof will not be repeated one by one.

Generating the j-th inference service pod of the N inference service pods based on the j-th model inference service and the j-th group configuration information, may include: generating a j-th inference service pod of the N inference service pods, based on the j-th model inference service and the j-th group configuration information, to obtain identification information of the j-th inference service pod; and acquiring connection information of the j-th inference service pod, based on the identification information of the j-th inference service pod.

The j-th model inference service may refer to an executable code of the j-th AI model inference service. Image information of the j-th model inference service may be file information including the executable code of the j-th AI model inference service.

The j-th group of configuration information may be generated based on preset template information. The preset template information includes parameters to be configured. The parameters to be configured included in the preset template information may include at least one of the following: health check parameters to be configured, resource limitation parameters to be configured, scheduling parameters to be configured, and storage parameters to be configured. The health check parameter to be configured is used to configure a keep-alive interface; the resource limit parameter to be configured is used to configure a range of occupied system resources; the scheduling parameter to be configured is used to configure address information; and the storage parameter to be configured is used to configure a data storage location.

Accordingly, the generation method of the j-th group of configuration information may include: setting contents of the parameters to be configured included in the preset template information to obtain the j-th group of configuration information. The specific parameter content in the j-th group of configuration information may be configured by an administrator according to actual needs. That is, in the case where the corresponding configuration information is generated for each inference service pod, the same preset template information is used to set the parameters to be configured included in the same preset template information to different parameter contents according to the actual needs, so as to obtain the configuration information corresponding to each inference service pod. It should be noted that the configuration information corresponding to different inference service pods is at least partially different.

The j-th group of configuration information may include at least one of the followings: the keep-alive interface configuration information of the j-th inference service pod; specifically, the keep-alive interface configuration information of the j-th inference service pod is used to configure a keep-alive interface for the j-th inference service pod; the resource restriction configuration information of the j-th inference service pod; specifically, the resource restriction configuration information of the j-th inference service pod includes a range of system resources occupied by the j-th inference service pod, where the range of system resources occupied by the j-th inference service pod may include a lowest value and a highest value of system resources occupied by the j-th inference service pod; the scheduling configuration information of the j-th inference service pod; specifically, the scheduling configuration information of the j-th inference service pod includes address information corresponding to the j-th inference service pod, where the address information corresponding to the j-th inference service pod is address information of a physical machine running the j-th inference service pod; or the storage configuration information of the j-th inference service pod; specifically, the storage configuration information of the j-th inference service pod includes: a data storage location of the j-th inference service pod, where the data storage location of the j-th inference service pod refers to a storage location of data generated during the operation of the j-th AI model inference service included in the j-th inference service pod, and/or a storage location of data required to be used during the operation of the j-th AI model inference service included in the j-th inference service pod. By setting the storage configuration information of the j-th inference service pod, the j-th inference service pod may conveniently obtain remotely stored data during the operation.

The identification information of the j-th inference service pod may include: the name and/or serial number of the j-th inference service pod. The serial number of the i-th inference service pod may be represented by identity (ID). The connection information of the j-th inference service pod may include at least one of the following: an Internet Protocol (IP) address and a uniform resource locator (URL) address of the j-th inference service pod, where the IP address is used to represent the address of the actual physical machine where the j-th inference service pod is located, and the URL address is used to represent the server and specific web page location of the Internet host where the j-th inference service pod is located.

In an example, the specific processing of generating the j-th inference service pod of the N inference service pods, based on the j-th model inference service and the j-th group of configuration information, may be realized by calling the Kubernetes (k8s) platform. Herein, in the k8s platform, the pod is a foundation of all business types, which may be a combination of one or more containers. In this example, the j-th set of inference service containers is the j-th inference service pod, and one or more containers contained in the j-th inference service pod may include the executable code of the j-th model inference service. For example, by calling the k8s interface, the k8s platform is controlled to create the j-th inference service pod based on the j-th group of configuration information and the image information of the j-th model inference service; the identification information of the j-th inference service pod generated by the k8s platform is obtained through the k8s interface, and the connection information of the j-th inference service pod is obtained based on the identification information of the j-th inference service pod.

It can be seen that by adopting the above scheme, each inference service pod may be generated according to each model inference service and the configuration information. Because each inference service pod is configured with relevant resources, scheduling, storage and other information, each inference service pod may run independently, which ensures the efficiency and accuracy of each inference service pod for processing streaming media separately. Moreover, since each inference service pod is generated and runs independently, a state of each inference service pod may also be analyzed more accurately, so that the subsequent processing of determining the replacement object based on the state of the inference service pod becomes more accurate and efficient.

Binding the N inference service pods and the relevant information of the N channels of streaming media, respectively, may specifically include: binding the connection information of the j-th inference service pod in the N inference service pods with the address information of the t-th channel of streaming media in the N channels of streaming media, to establish a data transmission channel between the j-th inference service pod and the t-th channel of streaming media. That is, after binding the IP address (or URL) of the j-th inference service pod with the address information of the t-th channel of streaming media, a data transmission channel between the addresses of the j-th inference service pod and the t-th channel of streaming media may be established, where t is a positive integer.

It should be noted that based on the identification information of the j-th inference service pod, the state information of the j-th inference service pod may also be obtained. The state information of the j-th inference service pod may include: any one of states that the j-th inference service pod is currently running, currently being created, currently being deactivated, and the like. Correspondingly, the binding of the connection information of the j-th inference service pod in the N inference service pods with the address information of the t-th channel of streaming media in the N channels of streaming media to establish the data transmission channel between the j-th inference service pod and the t-th channel of streaming media, further includes: binding the connection information of the j-th inference service pod in the N inference service pods with the address information of the t-th channel of streaming media in the N channels of streaming media to establish the data transmission channel between the j-th inference service pod and the t-th channel of streaming media, in the case where it is determined that the j-th inference service pod is currently running based on the state information of the j-th inference service pod.

After the above-mentioned processing is completed, the N channels of streaming media may be processed through the N inference service pods. Similarly, as an example, any one of the N inference service pods is taken as the j-th inference service pod, and the one bound by the j-th inference service pod is taken as the t-th channel of streaming media in the N channels of streaming media. In particular, the j-th inference service pod obtains a current video frame of the t-th channel of streaming media in real time through the data transmission channel with the t-th channel of streaming media, performs AI inference on the current video frame of the t-th channel of streaming media, and feeds back a real-time audit result.

In the above embodiments, the example has been described in detail by taking any one of the N inference service pods as the j-th inference service pod and taking any one of the N channels of streaming media as the t-th channel of streaming media. The processing for each inference service pod and each channel of streaming media in the N inference service pods and the N channels of streaming media is the same as the processing for the j-th inference service pod and the t-th channel of streaming media, the description of which will not be repeated one by one.

For example, assuming that N is equal to 2, the N channels of streaming media are streaming media 1 and streaming media 2, respectively, and the generated N inference service pods are inference service pod 1 and inference service pod 2, respectively. The inference service pod 1 is bound with the streaming media 1, and the inference service pod 2 is bound with the streaming media 2. Then, the inference service pod 1 obtains the current video frame of the streaming media 1 in real time, performs AI inference on the current video frame of the streaming media 1, and feeds back the real-time audit result. At the same time, the inference service pod 2 obtains the current video frame of the streaming media 2 in real time, performs AI inference on the current video frame of the streaming media 2, and feeds back the real-time audit result. It should be understood that it is only a possible way to bind the inference service pod 1 with the streaming media 1 and bind the inference service pod 2 with the streaming media 2. In other possible ways, it is also possible to bind the inference service pod 1 with the streaming media 2 and bind the inference service pod 2 with the streaming media 1. As long as different streaming media in the N channels of streaming media are bound with different inference service pods, it falls into the protection scope of the embodiments.

It can be seen that by adopting the above scheme, a corresponding quantity of inference service pods may be generated according to the quantity of streaming media to be processed this time, and the streaming media and the respective inference service pods may be bound. In this way, different inference service pods may process different streaming media, ensuring the accuracy of streaming media processing. Moreover, since each inference service pod is generated and runs independently, the state of each inference service pod can also be analyzed more accurately, so that the subsequent process of determining the replacement object based on the state of the inference service pod is more accurate and efficient.

In an implementation, detecting the i-th inference service pod to obtain the detection result of the i-th inference service pod, includes: performing an interface keep-alive detection on the i-th inference service pod to obtain the detection result of the i-th inference service pod.

Determining that the i-th inference service pod is in an abnormal state, based on the detection result of the i-th inference service pod, includes: determining that the i-th inference service pod is in the abnormal state, in the case where the detection result of the i-th inference service pod is a first type result, where the first type result includes a connection failure or a connection error.

The i-th inference service pod and the preceding j-th inference service pod may be the same or different. Regardless of whether the i-th inference service pod and the preceding j-th inference service pod are the same or not, the specific generation method and binding processing method of both are the same, the description of which will not be repeated. The i-th inference service pod is any one of the aforementioned N inference service pods. Since the processing for each inference service pod is the same, the description thereof will not be repeated herein.

Exemplarily, the performing the interface keep-alive detection on the i-th inference service pod to obtain the detection result of the i-th inference service pod may include: initiating a Transmission Control Protocol (TCP) three-way handshake to the i-th inference service pod to establish a new connection. If the establishment of the connection is successful, the detection result of the i-th inference service pod is a normal connection ; and if the establishment is failed and a returned code indicates connection failure or connection timeout, the detection result of the i-th inference service pod is connection failure; if the connection is failed and the returned code indicates a connection error, the detection result of the i-th inference service pod is a connection error. It should be noted that the description is exemplary only, and other methods may be used for the interface keep-alive detection to obtain the detection results. As long as the detection results of whether the connection of the i-th inference service pod is currently normal, failed, or false may be obtained, they are all within the protection scope of the embodiments.

In addition, the method may further include: determining that the i-th inference service pod is in a normal state, in the case where the detection result of the i-th inference service pod is a second type result, where the second result includes a normal connection. Further, in the case where it is determined that the i-th inference service pod is in the normal state, the above S101 is continued. That is, in the process of processing the streaming media for each inference service pod, the i-th inference service pod is detected to obtain the detection result of the i-th inference service pod.

By adopting the above scheme, each inference service pod may be detected in real time, and then whether the current state of each inference service pod is in an abnormal state may be obtained, so that the replacement object of the inference service pod in the abnormal state may be determined in time and subsequent processing may be performed to ensure the stability of the system.

In an implementation, the generating the replacement object of the i-th inference service pod, includes: generating the replacement object of the i-th inference service pod based on the i-th model inference service and the i-th group of configuration information, to obtain identification information of the replacement object of the i-th inference service pod; and acquiring connection information of the replacement object of the i-th inference service pod, based on the identification information of the replacement object of the i-th inference service pod, where the i-th group of configuration information includes at least one of the following: the keep-alive interface configuration information of the i-th inference service pod, the resource restriction configuration information of the i-th inference service pod, the scheduling configuration information of the i-th inference service pod, and the storage configuration information of the i-th inference service pod, to generate the replacement object of the i-th inference service pod.

The related descriptions of the i-th model inference service and the i-th group of configuration information are similar to those of the aforementioned j-th model inference service and the j-th group configuration information, the description of which will not be repeated herein.

The i-th model inference service is the same as the model inference service when generating the i-th inference service pod; and the i-th group of configuration information is the same as the configuration information when generating the i-th inference service pod. Since generation timing of the i-th inference service pod and generation timing of the replacement object of the i-th inference service pod are different, the identification information of the replacement object of the i-th inference service pod and the identification information of the i-th inference service pod are different, and the connection information of the replacement object of the i-th inference service pod and the connection information of the i-th inference service pod are also different. In other words, although the replacement object of the i-th inference service pod is generated by using the same i-th model inference service and the i-th group of configuration information, the IP address and/or URL address of the replacement object of the i-th inference service pod are different from the IP address and/or URL address of the i-th inference service pod.

It should be noted that the aforementioned process of generating the replacement object of the i-th inference service pod, may further includes: recording the abnormal information of the i-th inference service pod in a database; and stopping the interface keep-alive detection on the i-th inference service pod. The database may be any type of database, such as meta DB (meta database). Herein, all possible types of databases will not be exhaustive.

The timing of generating the replacement object of the i-th inference service pod may include the time before determining that the i-th inference service pod is in the abnormal state, the same time as determining that the i-th inference service pod is in the abnormal state, or the time after determining that the i-th inference service pod is in the abnormal state, each of which is within the protection scope of the embodiments.

In an implementation, the processing the k-th channel of streaming media through the replacement object of the i-th inference service pod, includes: generating and sending replacement request information of the i-th inference service pod, based on abnormal information of the i-th inference service pod and related information of the replacement object of the i-th inference service pod; and processing the k-th channel of streaming media through the replacement object of the i-th inference service pod, in response to obtaining replacement instruction information of the i-th inference service pod.

In this implementation, the timing of generating the replacement object of the i-th inference service pod may include the time before determining that the i-th inference service pod is in the abnormal state, or the same time as determining that the i-th inference service pod is in the abnormal state.

Generating and sending the replacement request information of the i-th inference service pod based on the abnormal information of the i-th inference service pod and the related information of the replacement object of the i-th inference service pod, may include: generating the replacement request information of the i-th inference service pod based on the abnormal information of the i-th inference service pod, the related information of the replacement object of the i-th inference service pod and the related information of the i-th inference service pod, and sending the replacement request information of the i-th inference service pod to a target device. The target device may include an electronic device used by the administrator, such as any one of a tablet computer, a notebook computer, a desktop computer, and the like. An information transmission interface may be provided between the target device and an electronic device that executes the streaming media processing method based on inference service in the embodiments, and the replacement request of the i-th inference service pod is sent to the target device through the information transmission interface.

The abnormal information of the i-th inference service pod may include: at least one of prompt information that the i-th inference service pod is currently in the abnormal state, time information that the i-th inference service pod is in the abnormal state, and the like. The related information of the replacement object of the i-th inference service pod may include: the connection information of the replacement object of the i-th inference service pod and/or the identification information of the replacement object of the i-th inference service pod. The related information of the i-th inference service pod may include: the connection information of the i-th inference service pod and/or the identification information of the i-th inference service pod.

The obtained replacement instruction information of the i-th inference service pod as mentioned above may also be transmitted based on the information transmission interface between the target device and the electronic device executing the inference service based streaming media processing method in the embodiments.

In addition, the method may further include: in response to acquiring rejection replacement information of the i-th inference service pod, deleting the replacement object of the i-th inference service pod, keeping processing the k-th channel of streaming media using the i-th inference service pod, and returning to S101. This is because, when receiving the replacement request information of the i-th inference service pod through the target device used by the administrator, the administrator may check the current real-time analysis result of the i-th inference service pod on the k-th channel of streaming media. If it is determined that the real-time analysis result is normal, the administrator will not replace the i-th inference service pod. In this case, the rejection replacement information of the i-th inference service pod may be fed back.

It can be seen that by adopting the above scheme, it is possible to determine the replacement object of a certain inference service pod, in the case where it is determined that an abnormality occurs in the inference service pod, and then directly process the k-th channel of streaming media through the replacement object of the i-th inference service pod after receiving the replacement instruction information. In this way, it may be guaranteed that the replacement object of the inference service pod is used to process the streaming media in time after the receipt of the replacement instruction information, which ensures the overall processing efficiency.

In an implementation, determining the replacement object of the i-th inference service pod, in the case where it is determined that the i-th inference service pod is in the abnormal state based on the detection result of the i-th inference service pod, includes: generating and sending the replacement request information of the i-th inference service pod based on the abnormal information of the i-th inference service pod, in the case where it is determined that the i-th inference service pod is in the abnormal state based on the detection result of the i-th inference service pod; and generating the replacement object of the i-th inference service pod, in response to obtaining replacement instruction information of the i-th inference service pod.

Generating and sending the replacement request information of the i-th inference service pod based on the abnormal information of the i-th inference service pod, may include: generating the replacement request information of the i-th inference service pod based on the abnormal information of the i-th inference service pod and the related information of the i-th inference service pod and sending the replacement request information of the i-th inference service pod to a target device. The target device may include an electronic device used by the administrator, such as any one of a tablet computer, a notebook computer, a desktop computer, and the like. An information transmission interface may be provided between the target device and the electronic device that executes the streaming media processing method based on inference service in the embodiments, and the replacement request of the i-th inference service pod is sent to the target device through the information transmission interface.

The abnormal information of the i-th inference service pod may include: at least one of prompt information that the i-th inference service pod is currently in the abnormal state, time information that the i-th inference service pod is in the abnormal state, and the like. The related information of the i-th inference service pod may include: the connection information of the i-th inference service pod and/or the identification information of the i-th inference service pod.

The method of generating the replacement object of the i-th inference service pod, as well as the sameness and difference of the replacement object of the i-th inference service pod and the i-th inference service pod are similar to the preceding embodiments, the description of which will not be repeated herein. In addition, the aforementioned process of generating the replacement object of the i-th inference service pod, may further include recording the abnormal information of the i-th inference service pod in a database; and stopping the interface keep-alive detection on the i-th inference service pod.

In this implementation, the timing of generating the replacement object of the i-th inference service pod includes the time after determining that the i-th inference service pod is in the abnormal state. Specifically, in this implementation, in the case where it is determined that the i-th inference service pod is in the abnormal state, the replacement request information of the i-th inference service pod will be sent in time, and the replacement object of the i-th inference service pod will be generated only in the case where the replacement instruction information of the i-th inference service pod is received.

In addition, the method may further include: in response to acquiring rejection replacement information of the i-th inference service pod, keeping processing the k-th channel of streaming media using the i-th inference service pod, and returning to S101. This is because, when receiving the replacement request information of the i-th inference service pod through the target device used by the administrator, the administrator may check the current processing result of the i-th inference service pod on the k-th channel of streaming media. If it is determined that the processing result is normal, the administrator will not replace the i-th inference service pod. In this case, the rejection replacement information of the i-th inference service pod may be fed back.

In this processing method, since it is determined whether to replace the i-th inference service pod when determining that the i-th inference service pod is in the abnormal state, the replacement object of the i-th inference service pod is generated only in the case where the replacement instruction information is received. In this way, while ensuring the overall processing stability, the problem of occupying processing resources where a replacement object is generated in advance but not used in the end may be reduced.

In an implementation, after determining the replacement object of the i-th inference service pod, the method further includes: disconnecting a binding between the k-th channel of streaming media and the i-th inference service pod, binding the k-th channel of streaming media with the replacement object of the i-th inference service pod, and deleting information storage record of the i-th inference service pod.

It should be noted that the deleting the information storage record of the i-th inference service pod may further include: recovering the processing resources of the i-th inference service pod.

The processing resources of the i-th inference service pod may include: system processing resources of the i-th inference service pod; and the information storage record of the i-th inference service pod may include at least one of: record information of the abnormal state of the i-th inference service pod, intermediate data generated during the k-th channel of streaming media processing by the i-th inference service pod, and the like.

The disconnecting the binding between the k-th channel of streaming media and the i-th inference service pod may include deleting the binding between the address information of the k-th channel of streaming media and the connection information of the i-th inference service pod. Accordingly, the controlling the binding of the k-th channel of streaming media with the replacement object of the i-th inference service pod may include binding the address information of the k-th channel of streaming media and the connection information of the replacement object of the i-th inference service pod.

After the binding the address information of the k-th channel of streaming media and the connection information of the replacement object of the i-th inference service pod, a data transmission channel between the k-th channel of streaming media and the replacement object of the i-th inference service pod may be established. Accordingly, the processing of the k-th channel of streaming media through the replacement object of the i-th inference service pod may mean that the replacement object of the i-th inference service pod performs AI inference on the current video frame of the k-th channel of streaming media obtained in real time through the data transmission channel between the k-th channel of streaming media and the replacement object of the i-th inference service pod, and feeds back the real-time audit result.

Further, it is also possible to perform the interface keep-alive detection on a replacement node of the i-th inference service pod in real time, and obtain corresponding detection results. The subsequent processes thereof are the same as those in the preceding embodiments, and therefore will not be repeated.

It can be seen that by adopting the above scheme, after the streaming media is switched to bind with a replacement object of a certain inference service pod, the relevant resources of the inference service pod may be deleted, so as to ensure more sufficient storage space and further ensure the processing efficiency and stability of the whole system.

Embodiments of the present disclosure also provide a streaming media processing apparatus based on an inference service. As shown in FIG. 2, the apparatus includes: a state keeping module 201, an object management module 202, and a streaming media management module 203.

The state keeping module 201 is configured to detect, in a process of processing a k-th channel of streaming media through an i-th inference service pod, the i-th inference service pod, to obtain a detection result of the i-th inference service pod, i and k being positive integers.

The object management module 202 is configured to determine a replacement object of the i-th inference service pod, in the case where it is determined that the i-th inference service pod is in an abnormal state based on the detection result of the i-th inference service pod.

The streaming media management module 203 is configured to process the k-th channel of streaming media through the replacement object of the i-th inference service pod.

The streaming media management module 203 is configured to control the object management module to generate N inference service pods, in the case where it is determined that there are N channels of streaming media to be processed, where the N channels of streaming media include the k-th channel of streaming media, the N inference service pods include the i-th inference service pod, and N is a positive integer greater than or equal to i and greater than or equal to k; and bind the N inference service pods to the N channels of streaming media, respectively, and process the N channels of streaming media through the N inference service pods, respectively, where different inference service pods of the N inference service pods correspond to different channels of streaming media.

The object management module 202 is configured to generate a j-th inference service pod of the N inference service pods, based on a j-th model inference service and a j-th group of configuration information, j being a positive integer less than or equal to N, where the j-th group of configuration information includes at least one of: keep-alive interface configuration information of the j-th inference service pod, resource restriction configuration information of the j-th inference service pod, scheduling configuration information of the j-th inference service pod, or storage configuration information of the j-th inference service pod.

The state keeping module 201 is configured to perform an interface keep-alive detection on the i-th inference service pod to obtain the detection result of the i-th inference service pod; and determine that the i-th inference service pod is in the abnormal state, in the case where the detection result of the i-th inference service pod is a first type result, where the first type result includes a connection failure or a connection error.

The state keeping module 201 is configured to generate and send replacement request information of the i-th inference service pod, based on abnormal information of the i-th inference service pod and related information of the replacement object of the i-th inference service pod; and control the streaming media management module to process the k-th channel of streaming media through the replacement object of the i-th inference service pod, in response to obtaining replacement instruction information of the i-th inference service pod.

The state keeping module 201 is configured to generate and send the replacement request information of the i-th inference service pod based on the abnormal information of the i-th inference service pod, in the case where it is determined that the i-th inference service pod is in the abnormal state based on the detection result of the i-th inference service pod; and control the object management module to generate the replacement object of the i-th inference service pod, in response to obtaining replacement instruction information of the i-th inference service pod; and the object management module 202 is configured to generate the replacement object of the i-th inference service pod.

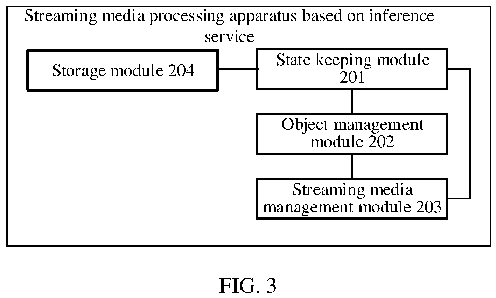

On the basis of FIG. 2, as shown in FIG. 3, the apparatus further includes: a storage module 204 configured to delete information storage record of the i-th inference service pod under control of the state keeping module.

The state keeping module 201 is configured to control the streaming media management module to disconnect a binding between the k-th channel of streaming media and the i-th inference service pod, and control the streaming media management module to bind the k-th channel of streaming media with the replacement object of the i-th inference service pod; and delete the information storage record of the i-th inference service pod in the storage module.

The streaming media management module 203 is configured to disconnect the binding between the k-th channel of streaming media and the i-th inference service pod, and bind the k-th channel of streaming media with the replacement object of the i-th inference service pod.

The aforementioned state keeping module, streaming media management module, storage module and object management module may be disposed in one apparatus, for example, in the same server. Alternatively, the aforementioned state keeping module, streaming media management module, storage module and object management module may be installed in different apparatuses. For example, the state keeping module is installed in the first server, the streaming media management module is installed in the second server, the storage module is installed in the database (such as meta database, meta DB), and the object management module is installed in the fourth server. Alternatively, some of modules may be in an apparatus, and remaining modules may be in another apparatus. For example, the state keeping module and the streaming media management module may be disposed in one server, the storage module may be disposed in a separate database, and the object management module may be disposed in another server. The possible disposals of the aforementioned modules are not exhaustive herein.

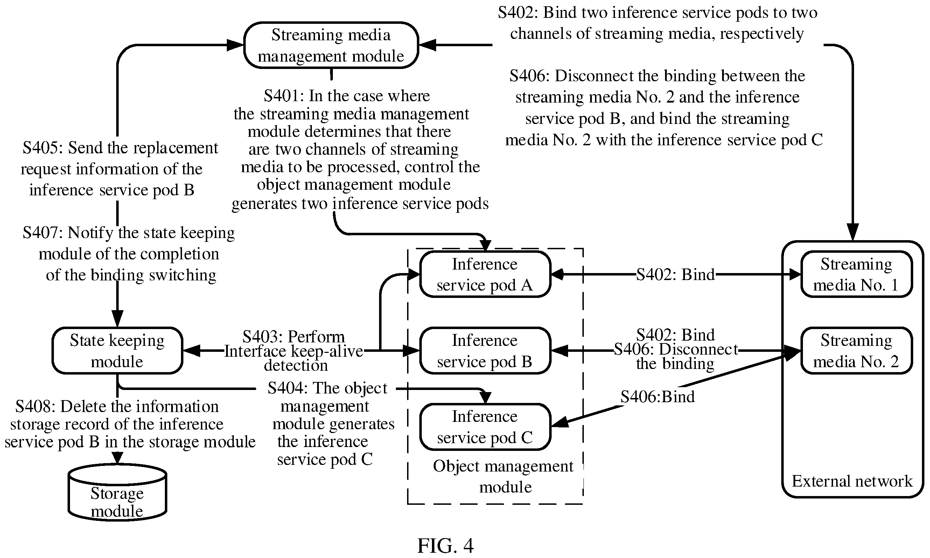

In conjunction with the aforementioned streaming media processing apparatus based on the inference service and the aforementioned streaming media processing method based on the inference service, an example will be discussed exemplarily with reference to FIG. 4 by way of N that is equal to 2 and an inference service pod that serves as a set of inference service containers, which specifically includes the followings.

In S401, in the case where the streaming media management module determines that there are two channels of streaming media to be processed, the object management module is controlled to generate two inference service pods.

Specifically, the streaming media management module interfaces with the external network according to the protocol. After determining that there is information such as the quantity of channels of streaming media to be processed which is equal to 2 (as shown in FIG. 4, streaming media No. 1 and streaming media No. 2) and the address of the streaming media, the object management module is controlled to create two inference service pods in conformity with the quantity of channels of streaming media, which are an inference service pod A and an inference service pod B, respectively, as shown in FIG. 4.

Controlling of the object management module to create two inference service pods in conformity with the quantity of streaming media may include: sending a service creation request to the object management module requesting to create two inference service pods; parsing, by the object management module, the service creation request, integrating two model inference services with respective configuration information, and calling a k8s interface to create an inference service pod A and an inference service pod B; after creating the inference service pod A and the inference service pod B, returning identification information of the inference service pod A and identification information of the inference service pod B to the streaming media management module; and obtaining and recording, by the streaming media management module, connection information corresponding to the inference service pod A and the inference service pod B, respectively, based on the identification information of the inference service pod A and the identification information of the inference service pod B.

In S402, the streaming media management module binds the two inference service pods to the two channels of streaming media, respectively, and processes the two channels of streaming media through the two inference service pods, respectively.

By performing this step, a data transmission channel may be established between the inference service pod A and the streaming media No. 1. The inference service pod A may obtain a current video frame of the streaming media No. 1 in real time through this data transmission channel, perform AI inference on the current video frame of the streaming media No. 1, and feedback a real-time audit result. Similarly, a data transmission channel are established between the inference service pod B and the streaming media No. 2, and the inference service pod B may obtain a current video frame of the streaming media No. 2 in real time through this data transmission channel, perform AI inference on the current video frame of streaming media No. 2, and feedback a real-time audit result.

In S403, the state keeping module performs an interface keep-alive detection of the two inference service pods, and obtains a detection result of the two inference service pods.

In S404, in the case where the inference service pod B is determined to be in an abnormal state based on the detection result of the inference service pod B, the object management module generates an inference service pod C which is considered as a replacement object of the inference service pod B.

In addition, the state keeping module may also record abnormal information of the inference service pod B in the storage module, and stop the interface keep-alive detection of the inference service pod B.

In S405, the state holding module sends replacement request information of the inference service pod B.

Specifically, the state keeping module generates the replacement request information of the inference service pod B based on the abnormal information of the inference service pod B, the relevant information of the inference service pod C (i.e., the replacement object of the inference service pod B) and the relevant information of the inference service pod B, and sends the replacement request information of the inference service pod B through a callback interface between the the state keeping module and the streaming media management module; and then the state keeping module polls and waits for feedback from the streaming media management module.

In S406, the state keeping module obtains replacement instruction information of the inference service pod B, controls the streaming media management module to disconnect the binding between the streaming media No. 2 and the inference service pod B, and binds the streaming media No. 2 with the inference service pod C.

The replacement instruction information of the inference service pod B may be generated and sent to the streaming media management module after an administrator observes the replacement request information of the inference service pod B through a target device used by the administrator. For example, in an example, the streaming media management module may be a server, which may send the replacement request of the inference service pod B to the target device through a wired connection or a wireless connection with the target device; and receive the replacement instruction information of the inference service pod B through the wired connection or the wireless connection with the target device.

After completion of this step, the inference service pod C performs AI inference on the current video frame of streaming media No. 2 obtained in real time through the data transmission channel with the streaming media No. 2, and feeds back a real-time audit result.

In S407, the streaming media management module notifies the state keeping module of the completion of the binding switching.

In S408, the state keeping module deletes the information storage record of the inference service pod B in the storage module.

Specifically, the state maintenance module calls the k8s interface to delete the inference service pod B in the k8s platform, recovers system resources (i.e., the processing resources of the inference service pod B), and deletes the information storage records of the inference service pod B in the storage module. In addition, while executing S408, the state keeping module performs the interface keep-alive detection on the inference service pod C.

In the technical solution of the present disclosure, the acquisition, storage and application of the user's personal information involved are all in compliance with the provisions of relevant laws and regulations, and do not violate public order and good customs.

According to the embodiments of the present disclosure, the present disclosure also provides an electronic device, a readable storage medium and a computer program product.

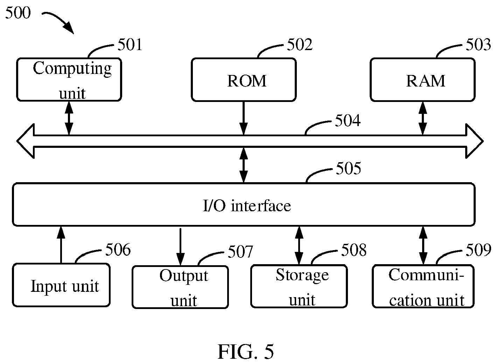

FIG. 5 shows a schematic block diagram of an exemplary electronic device 500 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processing, a cellular phone, a smart phone, a wearable device and other similar computing devices. The components shown herein, their connections and relationships, and their functions are merely exemplary, and are not intended to limit the implementation of the present disclosure as described and/or required herein.

As shown in FIG. 5, the device 500 includes a computing unit 501 that may perform various appropriate actions and processes according to a computer program stored in a Read-Only Memory (ROM) 502 or a computer program loaded from a storage unit 508 into a Random Access Memory (RAM) 503. Various programs and data required for an operation of device 500 may also be stored in the RAM 503. The computing unit 501, the ROM 502 and the RAM 503 are connected to each other through a bus 504. The input/output (I/O) interface 505 is also connected to the bus 504.

A plurality of components in the device 500 are connected to the I/O interface 505, and include an input unit 506 such as a keyboard, a mouse, or the like; an output unit 507 such as various types of displays, speakers, or the like; the storage unit 508 such as a magnetic disk, an optical disk, or the like; and a communication unit 509 such as a network card, a modem, a wireless communication transceiver, or the like. The communication unit 509 allows the device 500 to exchange information/data with other devices through a computer network such as the Internet and/or various telecommunication networks.

The computing unit 501 may be various general-purpose and/or special-purpose processing components with processing and computing capabilities. Some examples of the computing unit 501 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 501 performs various methods and processing described above, such as the above streaming media processing method. For example, in some implementations, the above streaming media processing method may be implemented as a computer software program tangibly contained in a computer-readable medium, such as the storage unit 508. In some implementations, a part or all of the computer program may be loaded and/or installed on the device 500 via the ROM 502 and/or the communication unit 509. When the computer program is loaded into RAM 503 and executed by the computing unit 501, one or more steps of the streaming media processing method described above may be performed. Alternatively, in other implementations, the computing unit 501 may be configured to perform the above streaming media processing method by any other suitable means (e.g., by means of firmware).

Various implements of the system and technologies described above herein may be implemented in a digital electronic circuit system, an integrated circuit system, a Field Programmable Gate Array (FPGA), an Application Specific Integrated Circuit (ASIC), Application Specific Standard Parts (ASSP), a System on Chip (SOC), a Complex Programmable Logic Device (CPLD), a computer hardware, firmware, software, and/or a combination thereof. These various implementations may be implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

The program code for implementing the method of the present disclosure may be written in any combination of one or more programming languages. The program code may be provided to a processor or controller of a general-purpose computer, a special-purpose computer or other programmable data processing devices, which enables the program code, when executed by the processor or controller, to cause the function/operation specified in the flowchart and/or block diagram to be implemented. The program code may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to the user; and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system (which serves as, for example, a data server) including a back-end component, or in a computing system (which serves as, for example, an application server) including a middleware, or in a computing system including a front-end component (e.g., a user computer with a graphical user interface or web browser through which the user may interact with the implementation of the system and technologies described herein), or in a computing system including any combination of the back-end component, the middleware component, or the front-end component. The components of the system may be connected to each other through any form or kind of digital data communication (e.g., a communication network). Examples of the communication network include a Local Area Network (LAN), a Wide Area Network (WAN), and the Internet.

A computer system may include a client and a server. The client and server are generally far away from each other and usually interact with each other through a communication network. A relationship between the client and the server is generated by computer programs running on corresponding computers and having a client-server relationship with each other. The server may be a cloud server, a distributed system server, or a blockchain server.

It should be understood that, the steps may be reordered, added or removed by using the various forms of the flows described above. For example, the steps recorded in the present disclosure can be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having ordinary skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

## Claims

1. A streaming media processing method based on an inference service, **characterized by** comprising:
detecting (S101), in a process of processing a k-th channel of streaming media through an i-th inference service pod, the i-th inference service pod, to obtain a detection result of the i-th inference service pod, i and k being positive integers;
determining (S102) a replacement object of the i-th inference service pod, in a case of it is determined that the i-th inference service pod is in an abnormal state based on the detection result of the i-th inference service pod; and
processing (S103) the k-th channel of streaming media through the replacement object of the i-th inference service pod.

2. The method of claim 1, further comprising:
generating N inference service pods, in a case of it is determined that there are N channels of streaming media to be processed, wherein the N channels of streaming media comprise the k-th channel of streaming media, the N inference service pods comprise the i-th inference service pod, and N is a positive integer greater than or equal to i and greater than or equal to k; and
binding the N inference service pods to the N channels of streaming media, respectively, and processing the N channels of streaming media through the N inference service pods, respectively, wherein different inference service pods of the N inference service pods correspond to different channels of streaming media.

3. The method of claim 2, wherein generating the N inference service pods, comprises:
generating a j-th inference service pod of the N inference service pods, based on a j-th model inference service and a j-th group of configuration information, j being a positive integer less than or equal to N, wherein the j-th group of configuration information comprises at least one of: keep-alive interface configuration information of the j-th inference service pod, resource restriction configuration information of the j-th inference service pod, scheduling configuration information of the j-th inference service pod, or storage configuration information of the j-th inference service pod.

4. The method of claim 1 or 2, wherein detecting (S101) the i-th inference service pod to obtain the detection result of the i-th inference service pod, comprises: performing an interface keep-alive detection on the i-th inference service pod to obtain the detection result of the i-th inference service pod; and
determining that the i-th inference service pod is in the abnormal state, based on the detection result of the i-th inference service pod, comprises: determining that the i-th inference service pod is in the abnormal state, in the case of the detection result of the i-th inference service pod is a first type result, wherein the first type result comprises a connection failure or a connection error.

5. The method of claim 1 or 2, wherein
processing (S103) the k-th channel of streaming media through the replacement object of the i-th inference service pod, comprises:
generating and sending replacement request information of the i-th inference service pod, based on abnormal information of the i-th inference service pod and related information of the replacement object of the i-th inference service pod; and
processing the k-th channel of streaming media through the replacement object of the i-th inference service pod, in response to obtaining replacement instruction information of the i-th inference service pod;
optionally, determining (S102) the replacement object of the i-th inference service pod, in the case of it is determined that the i-th inference service pod is in the abnormal state based on the detection result of the i-th inference service pod, comprises:
generating and sending replacement request information of the i-th inference service pod based on abnormal information of the i-th inference service pod, in the case of it is determined that the i-th inference service pod is in the abnormal state based on the detection result of the i-th inference service pod; and
generating the replacement object of the i-th inference service pod, in response to obtaining replacement instruction information of the i-th inference service pod.

6. The method of any one of claims 2 to 5, wherein after determining (S102) the replacement object of the i-th inference service pod, the method further comprises:
disconnecting a binding between the k-th channel of streaming media and the i-th inference service pod, binding the k-th channel of streaming media with the replacement object of the i-th inference service pod, and deleting information storage record of the i-th inference service pod.

7. A streaming media processing apparatus based on an inference service, **characterized by** comprising: a state keeping module (201), an object management module (202), and a streaming media management module (203),
wherein the state keeping module (201) is configured to detect, in a process of processing a k-th channel of streaming media through an i-th inference service pod, the i-th inference service pod, to obtain a detection result of the i-th inference service pod, i and k being positive integers;
the object management module (202) is configured to determine a replacement object of the i-th inference service pod, in a case of it is determined that the i-th inference service pod is in an abnormal state based on the detection result of the i-th inference service pod; and
the streaming media management module (203) is configured to process the k-th channel of streaming media through the replacement object of the i-th inference service pod.

8. The apparatus of claim 7, wherein the streaming media management module (203) is configured to control the object management module (202) to generate N inference service pods, in a case of it is determined that there are N channels of streaming media to be processed, wherein the N channels of streaming media comprise the k-th channel of streaming media, the N inference service pods comprise the i-th inference service pod, and N is a positive integer greater than or equal to i and greater than or equal to k; and bind the N inference service pods to the N channels of streaming media, respectively, and process the N channels of streaming media through the N inference service pods, respectively, wherein different inference service pods of the N inference service pods correspond to different channels of streaming media.

9. The apparatus of claim 8, wherein the object management module (202) is configured to generate a j-th inference service pod of the N inference service pods, based on a j-th model inference service and a j-th group of configuration information, j being a positive integer less than or equal to N, wherein the j-th group of configuration information comprises at least one of: keep-alive interface configuration information of the j-th inference service pod, resource restriction configuration information of the j-th inference service pod, scheduling configuration information of the j-th inference service pod, or storage configuration information of the j-th inference service pod.

10. The apparatus of claim 7 or 8, wherein the state keeping module (201) is configured to perform an interface keep-alive detection on the i-th inference service pod to obtain the detection result of the i-th inference service pod; and determine that the i-th inference service pod is in the abnormal state, in the case of the detection result of the i-th inference service pod is a first type result, wherein the first type result comprises a connection failure or a connection error.

11. The apparatus of claim 7 or 8, wherein the state keeping module (201) is configured to generate and send replacement request information of the i-th inference service pod, based on abnormal information of the i-th inference service pod and related information of the replacement object of the i-th inference service pod; and control the streaming media management module (203) to process the k-th channel of streaming media through the replacement object of the i-th inference service pod, in response to obtaining replacement instruction information of the i-th inference service pod;
optionally, the state keeping module (201) is configured to generate and send replacement request information of the i-th inference service pod based on abnormal information of the i-th inference service pod, in the case of it is determined that the i-th inference service pod is in the abnormal state based on the detection result of the i-th inference service pod; and control the object management module (202) to generate the replacement object of the i-th inference service pod, in response to obtaining replacement instruction information of the i-th inference service pod; and
the object management module (202) is configured to generate the replacement object of the i-th inference service pod.

12. The apparatus of any one of claims 8 to 11, further comprising: a storage module (204) configured to delete information storage record of the i-th inference service pod under control of the state keeping module (201),
wherein the state keeping module (201) is configured to control the streaming media management module (203) to disconnect a binding between the k-th channel of streaming media and the i-th inference service pod, and control the streaming media management module (203) to bind the k-th channel of streaming media with the replacement object of the i-th inference service pod; and delete the information storage record of the i-th inference service pod in the storage module (204); and
the streaming media management module (203) is configured to disconnect the binding between the k-th channel of streaming media and the i-th inference service pod, and bind the k-th channel of streaming media with the replacement object of the i-th inference service pod.

13. An electronic device (500), comprising:
at least one processor; and
a memory connected in communication with the at least one processor;
wherein the memory stores an instruction executable by the at least one processor, and the instruction, when executed by the at least one processor, enables the at least one processor to execute the method of any one of claims 1 to 6.

14. A non-transitory computer-readable storage medium storing a computer instruction thereon, wherein the computer instruction is used to cause a computer to execute the method of any one of claims 1 to 6.

15. A computer program product comprising a computer program, wherein the computer program implements the method of any one of claims 1 to 6, when executed by a processor.
